Europäisches Patentamt

European Patent Office

Office européen des brevets

(11) Veröffentlichungsnummer: **0 217 172**
**A2**

(12) **EUROPÄISCHE PATENTANMELDUNG**

(21) Anmeldenummer: 86112277.8

(22) Anmeldetag: 05.09.86

(51) Int. Cl.⁴: **F 16 K 15/06**
**F 16 K 31/52**

(30) Priorität: 26.09.85 DE 3534235

(43) Veröffentlichungstag der Anmeldung:
**08.04.87 Patentblatt 87/15**

(84) Benannte Vertragsstaaten:
**AT BE CH DE FR GB LI NL**

(71) Anmelder: **MANIBS R. Mannesmann GmbH & ibs Nagel
GmbH & Co. KG.
Lempstrasse 24
D-5630 Remscheid-Bliedinghausen(DE)**

(72) Erfinder: **Servé, Klaus
Elberfelder Strasse 39
D-5608 Radevormwald(DE)**

(74) Vertreter: **Buse, Karl Georg, Dipl.-Phys. et al,
Patentanwälte Dipl.-Phys. Buse Dipl.-Phys. Mentzel
Dipl.-Ing. Ludewig Unterdörnen 114
D-5600 Wuppertal 2(DE)**

(54) **Absperrhahn mit insbesondere kugelförmigem Hahnküken.**

(57) Bei einem Absperrhahn mit einem insbesondere kugelförmigen Hahnküken im Hahngehäuse ragt ein Drehzapfen aus dem Gehäuse heraus, der mit einer Handhabe in Verbindung steht und das Hahnküken zwischen seiner Offen- und Sperrstellung verdreht. Um eine leichtgängige Betätigung des Absperrhahns zu gewährleisten, wird vorgeschlagen, den Drehzapfen mit einer gleichachsig angeordnete, hülsenförmig gestalteten Stellnuß drehfest zu verbinden, die in ihrer Hülsenwand mit einer wendelförmigen Führungsnut versehen ist. Im Hülseninneren ist eine dazu koaxiale Spindel angeordnet, auf welcher eine Spindelmutter sitzt, die mit einem Radialansatz in die Führungsnut der Hülsenwand eingreift. Die Handhabe sitzt drehfest an der Spindel and überträgt mittelbar über die Spindelmutter und die Stellnuß mit ihrer Führungsnut die Drehung auf den Drehzapfen des Hahnkükens.

./...

FIG.1

**PATENTANWÄLTE**
zugelassene Vertreter beim Europäischen Patentamt

**DIPL.-PHYS. BUSE · DIPL.-PHYS. MENTZEL · DIPL.-ING. 0217172**
Unterdörnen 114 · Postfach 200210 · 5600 Wuppertal 2 · Fernruf (0202) 55 70 22/23/24 · Telex 8 591 606 wpat

56                                5600 Wuppertal 2, den

Kennwort: "Kugelhahnschieber"

Manibs R. Mannesmann & ibs Nagel GmbH. & Co. KG.,
Lempstraße 24, 5630 Remscheid-Bliedinghausen

---

Absperrhahn mit insbesondere kugelförmigem Hahnküken

---

Die Erfindung bezieht sich auf einen Absperrhahn der im
Oberbegriff des Anspruches 1 angegebenen Art. Derartige
Hähne haben gegenüber anderen Absperrorganen den Vorteil
einer guten Dichtigkeit und eines sehr geringen Reibverschleisses an den Dichtflächen. Günstig ist auch der robuste
Aufbau. Bei den bekannten Absperrhähnen sitzt die Handhabe
unmittelbar an dem aus dem Hahngehäuse herausragenden
Drehzapfen des Hahnkükens. Durch einen Stellwinkel von
90° läßt sich das Hahnküken zwischen seiner Offen- und
Sperrstellung verdrehen.

Durch die an sich gut dichtwirksame große Flächenberührung
zwischen dem insbesondere kugelförmig gestalteten Hahnküken
und seinem Hahngehäuse fallen verhältnismäßig hohe Reibungskräfte auf, die das Verstellen der Handhabe mühsam machen.
In manchen Anwendungsfällen, wenn insbesondere fachlich
unkundige Personen den Absperrhahn zu bedienen haben,
wird der geringe Stellwinkel zwischen der Offen- und
Sperrstellung des Hahns als nachteilig empfunden; man
meint, beeinflußt durch die ständige Betätigungserfahrung
mit Ventilen, daß eine 9o°-Drehung der Handhabe die gewünschte Endposition des Absperrorgans auch bei solchen Kugelhähnen noch nicht herbeigeführt haben könne und versucht die Handhabe weiterzudrehen. Sofern keine Endanschläge den Stellwinkel begrenzen, besteht dadurch die Gefahr einer Mißeinstellung. Sofern Anschläge vorhanden sind, werden diese nutzlos immer wieder einer Belastung ausgesetzt. Andererseits ist es in manchen Anwendungsfällen nach wie vor wichtig, Absperrhähne mit einem kleinen Stellwinkel ihrer Handhabe anzuwenden.

Der Erfindung liegt die Aufgabe zugrunde, einen preiswerten Absperrhahn zu entwickeln, der sich durch Leichtgängigkeit seiner Drehverstellung auszeichnet und Fehlbedienungen ausschließt. Dies wird erfindungsgemäß durch die im Kennzeichen des Anspruches 1 angeführten Maßnahmen erreicht, denen folgende besondere Bedeutung zukommt:

Die Erfindung gestattet es, von üblichen Absperrhähnen auszugehen, deren Handhabe jetzt aber nicht unmittelbar mit dem Drehzapfen zusammenwirkt, sondern mittelbar über dazwischengeschaltete Glieder, nämlich die genannte Stellnuß, die Spindel und die darauf sitzende Spindelmutter. Obwohl in preiswerter Weise handelsübliche Absperrhähne benutzt werden, lassen sich diese nachträglich mit einer leichtgängig über viele Umdrehungen verdrehbare Handhabe versehen, um das Hahnküken zwischen der Offen- und Sperrstellung zu überführen. Die an Betätigung von Ventilen gewöhnte Person braucht bei diesen Absperrhähnen nicht "umzulernen". Trotz dieser zwischengeschalteten Mittel ergibt sich ein geringer Platzbedarf, weil der Hülseninnenraum der Stellnuß zugleich zur Anordnung der Spindel ausgenutzt wird und auch die Kupplungsverbindung zwischen der Spindel und der Stellnuß, nämlich die mit dem Radialansatz ausgerüstete Spindelmutter, im Hülseninneren der Stellnuß untergebracht ist.

Die wendelförmige Führungsnut in der Hülsenwand der Stellnuß erstreckt sich winkelmäßig mindestens über den für die Betätigung des Hahnkükens erforderlichen Stellwinkel, um ihn jeweils in die endgültige Position der Offen- und Sperrstellung zu überführen. Aus Gründen der Raumersparnis wird man die Gewindegänge der Spindel über die ganze axiale Länge der Führungsnut gemäß Anspruch 2 verlaufen lassen, wobei für die Leichtgängigkeit die Maßnahmen des Anspruches 3 sehr vorteilhaft sind. Die Wendelsteigung ist in der Regel um mindestens eine Zehnerpotenz größer als die Steigung der Gewindegänge in der Spindel.

Für den einfachen Aufbau empfiehlt sich die Steckverbindung nach Anspruch 4. Eine gleichmäßige Führungswirkung ergibt sich insbesondere durch den axial-symmetrischen Aufbau der zwischengeschalteten Bauteile gemäß Anspruch 5. Der Anspruch 6 bringt eine kompakte einfache Bauweise der erfindungsgemäßen Neuerung in Verbindung mit dem handelsüblichen Absperrhahn.

In der Zeichnung ist die Erfindung in einem Ausführungsbeispiel dargestellt. Es zeigen:

Fig. 1 im Axialschnitt und teilweise aufgebrochen den erfindungsgemäßen Absperrhahn in Offenstellung des Hahnkükens,

Fig. 2 eine Seitenansicht eines beim Hahn in Fig. 1 verwendeten Bauteils, nämlich einer Stellnuß,

Fig. 3 die Endansicht auf die Stellnuß von Fig. 2 und

Fig. 4 die Draufsicht auf ein weiteres beim Absperrhahn
von Fig. 1 verwendetes Bauteil, nämlich eine
Spindelmutter.

Der Absperrhahn lo umfaßt zunächst, in konventioneller
Weise, ein Hahngehäuse 11 und ein darin drehgelagertes
kugelförmiges Hahnküken 12. Dieser Hahn lo dient als
Absperrorgan für Gasleitungen, insbesondere im Erdeinbau.
Das Gehäuse 11 umfaßt eine Zylinderwand 13, die beidendig
durch Stirnwände 14, 14' abgeschlossen ist, die mit Durchbrüchen versehen sind. Die Durchbrüche sind ausgerichtet
mit der Rohröffnung eines jeweils daran angesetzten Eintrittsrohrs 15 bzw. Austrittsrohrs 15'. Diese Rohre 15,
15' können ihrerseits Anschlüsse für daran anzuschließende
Rohrleitungen bilden. Das Hahnküken 12 ist mit einem
seine Drehachse bestimmenden Drehzapfen 16 versehen, der
durch einen oberen Ausbruch 17 in der Zylinderwand 13
herausragt und mit einem Vierkant 18 versehen ist. Bei
konventioneller Verwendung des Absperrhahns lo ist der
Vierkant mit einer nicht näher gezeigten Handhabe in
unmittelbarer formschlüssiger Verbindung. Die Handhabe
besteht in der Regel aus einem Hebelarm.

Der Drehzapfen 16 ist natürlich drehfest mit dem Hahnküken 12 verbunden und ist in einem Stutzen 2o drehgelagert, der über dem erwähnten Ausbruch 17 der Zylinderwand 13 sitzt. Die Halterung des Drehzapfens 16 wird
durch eine feste Halteplatte 21 besorgt, die randseitige
Lappen aufweist, mit denen einerseits die drehfeste
Position und andererseits nach oben wirksame Anschläge
mit einer darüber befindlichen Unterlegscheibe 22 erzeugt
werden, die mit dem Drehzapfen 16 mitdrehbar ist und
von einem Sicherungsring 23 daran axial festgehalten wird.

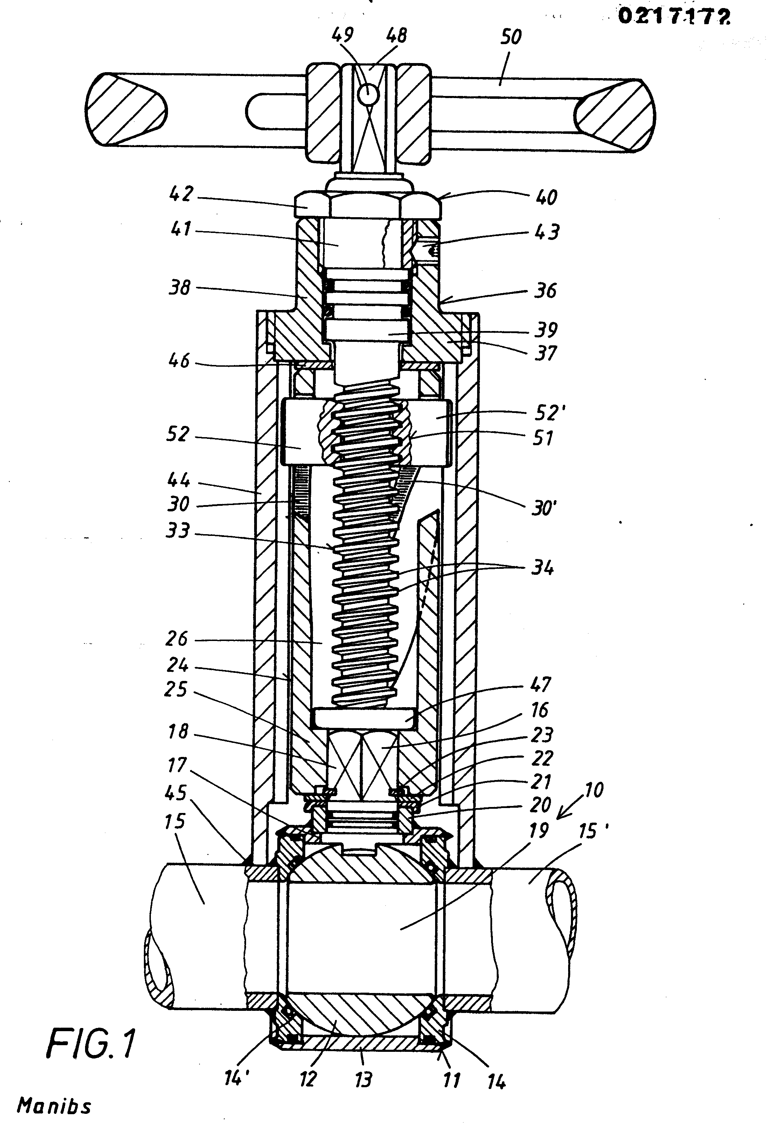

Das Hahnküken 12 ist mit einer Durchgangsbohrung 19 versehen, die dem Öffnungsquerschnitt der Ein- und Austrittsrohre 15, 15' angepaßt ist. In der gezeigten Drehlage von Fig. 1, wo eine Ausrichtung der Rohröffnungen mit der Durchgangsbohrung 19 vorliegt, liegt die Offenstellung des Hahnkükens 12 vor. Durch die erwähnte bekannte Handhabe läßt sich das Hahnküken um einen Stellwinkel von 90° verdrehen, wo die Durchgangsbohrung 19 quer zu den Rohröffnungen des Ein- und Austrittsrohrs 15, 15' angeordnet ist, weshalb dann die Sperrstellung des Hahns vorliegt.

Dieser vorstehend beschriebene, an sich bekannte Absperrhahn 1o kann nun für die Erfindung benutzt werden, um in folgender Weise mit einer mittelbaren Betätigung des Hahnkükens ausgerüstet zu werden:

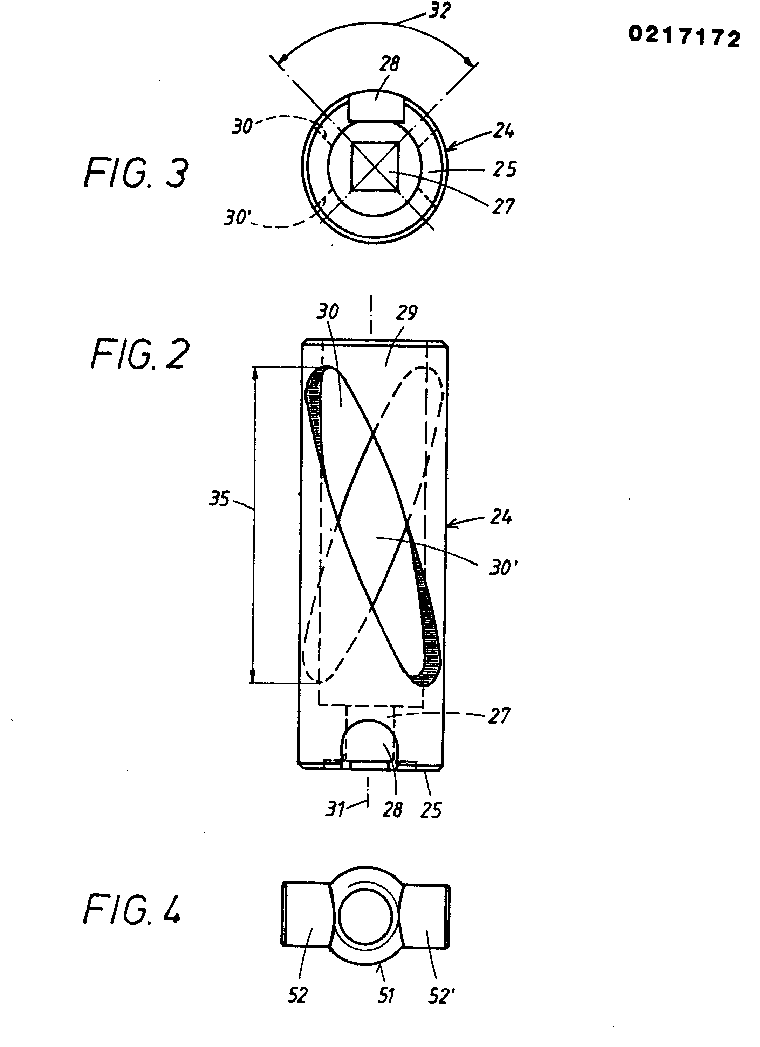

Auf den Vierkant 18 des Drehzapfens 16 wird eine hülsenförmige Stellnuß 24 aufgesteckt. Die Kupplung dieser Teile kommt dadurch zustande, daß die Stellnuß 24 mit einem Boden 25, gemäß Fig. 3, versehen ist, der den Hülsenraum 26 am einen Ende abschließt und ein Vierkantloch 27 trägt, was für eine formschlüssige Verbindung der beiden Teile 16, 24 sorgt. Eine seitliche Aussparung 28 im Bodenbereich der Stellnuß 24 ist vorgesehen, um mit einem aus Fig. 1 nicht näher erkennbaren, nach oben gebogenen, etwa parallelachsig verlaufenden Lappen zusammenzuwirken, der bei der vorbekannten Benutzung des Absperrhahns 1o für eine Schraubsicherung der unmittelbar am Drehzapfen 16 angreifenden Handhabe dient. Mit dieser Aussparung 28 ist es daher auch hinsichtlich dieser Nebensächlichkeiten nicht erforderlich, die bekannte Raumform des Absperrhahns 1o zu verändern.

Wie aus Fig. 2 und 3 zu erkennen ist, ist die Hülsenwand 29 der Stellnuß 24 mit zwei einander diametral gegenüberliegenden Führungsnuten 3o, 3o' versehen, die aber wendelförmig zur Hülsenachse 31 verlaufen und sich dabei im vorliegenden Fall über einen Winkelbetrag 32 von mindestens 9o° erstrecken. In Fig. 3 sind gestrichelt die Grenzen dieser Führungsnuten 3o, 3o' und ihrer Radialpositionen bei der Wendelung eingezeichnet. Die Führungsnuten 3o, 3o' erzeugen mit diesen 9o° ein Viertel einer vollen Ganghöhe der Wendelung. Die beiden Führungsnuten 3o, 3o' sind formgleich und parallel zueinander angeordnet, verlaufen aber in einem Winkelsatz von 18o° zueinander. Die beiden seitlichen Begrenzungen der Führungsnut bilden eine parallelkantige Führungsrinne mit gleichbleibender lichter Rinnenweite.

Im Montagezustand gemäß Fig. 1 gelangt in den Hülseninnenraum 26 eine Spindel 33, deren mit Gewindegängen 34 ausgerüsteter Längenbereich sich über die ganze axiale Länge 35 der Führungsnuten 3o, 3o' erstreckt. Es handelt sich dabei um ein Trapezgewinde M 16 x 4 mit etwa 15 Gängen über die erwähnte axiale Länge 35. Die Steigungshöhe der Wendel in der Führungsnut 3o, 3o' ist also etwa 6o mal größer als die Steigung eines Gewindegangs 34 der Spindel 33.

Die Spindel 33 ist in einem Spindellager 36 aufgenommen, in dessen Lagerbuchse 38 der obere Teil des Spindelschaftes 39 aufgenommen ist. Der Spindelschaft hat mehrere durch O-Ringe gedichtete Bund und wird von einer Verschlußkappe 4o in der erwähnten Lagerbuchse 38 des Spindellagers 36 axial festgehalten. Dazu besitzt die Verschlußkappe 4o einen mit Außengewinde versehenen Hals 41 und einen zur Werkzeugbetätigung geeigneten Kopf 42. Das Außengewinde des Kappenhalses 41 greift in ein im oberen Bereich der Lagerbuchse 38 vorgesehenes Innengewinde ein

0217172

und wird in der Verschlußstellung, wo der Kappenkopf 42 an das Stirnende der Lagerbuchse 38 stößt, durch eine Madenschraube 43 arretiert.

Das Spindellager 36 umfaßt noch einen Flansch 37 mit einem Außengewinde, das im Montagefall in das obere Ende eines Hüllrohres 44 eingeschraubt wird, welches, wie ein Mantel, die Stellnuß 24 umgibt und koaxial sowohl zur Stellnuß 24 als auch zu der dort aufgenommenen Spindel 33 liegt. Das Hüllrohr 44 ist an seinem unteren Ende mit dem Hahngehäuse 11 verbunden, insbesondere durch die angedeuteten Schweißnähte 45. Nach dem Einschrauben des Flansches 37 in das Hüllrohr 44 wird diese Verbindung verbohrt und durch Sicherungsschrauben arretiert. Zwischen dem oberen Stirnende der Stellnuß 24 und dem Flansch 37 des Spindellagers 36 kann eine für eine Passung sorgende Ringscheibe 46 eingelegt sein. Das untere Stirnende der Spindel 33 ist an einer Einlage 47 abgestützt, die über dem Nußboden 25 im Hülseninneren 46 angeordnet ist und oberhalb des Drehzapfens 16 liegt. Die Einlage 47 sorgt für eine günstige Reibung beim Drehen der Spindel 33 und gegebenenfalls auch für eine Lagerung des unteren Spindelendes.

Ein Schaftende 48 der Spindel 33 ragt aus der axialen Bohrung der Verschlußkappe 4o heraus und dient zur formschlüssigen Verbindung mit einer Drehhandhabe 5o, die hier aus einem Handrad besteht, dessen zentrale Nabe nach dem Aufstecken auf das unrund gestaltete Schaftende 48 durch eine Sicherungsschraube arretiert ist, die in die angedeutete Radialaussparung 49 des Schaftendes 48 eingreift.

Beim Drehen der Handhabe 5o wird die Spindel 33 mitgenommen.

Auf den Gewindegängen 34 der Spindel 33 sitzt eine Spindelmutter 51, die, wie insbesondere aus Fig. 4 hervorgeht,
mit zwei einander diametral gegenüberliegenden Radialansätzen 52, 52' versehen ist. Diese Radialansätze greifen
in die Führungsnuten 3o, 3o' der Stellnuß 24 ein und
dienen als Kupplungselement für die Übertragung der
Drehbewegung der Stellspindel 33 auf die Stellnuß 24.
Beim Drehen der Handhabe 5o läuft nämlich die Mutter 51
auf den Gewindegängen 34 der Spindel 33, in Abhängigkeit
von der Drehrichtung, auf- bzw. abwärts, weil die Spindelmutter 51 mit ihren Radialansätzen 52, 52' durch die
Nuß 24 festgehalten wird. Es kommt dadurch eine Axialbewegung der Spindelmutter 51 zustande, wobei die Radialansätze 52, 52' gegen die gewendelten Wände der beiden Nuten
3o, 3o' stoßen und daher der Stellnuß 24 eine Drehung geben.
Diese Drehung ist aber von der Wendelung dieser Führungsnuten 3o, 3o' abhängig und vollzieht sich folglich nur
in dem durch den erwähnten Winkelbetrag 32 bestimmten
Stellwinkel, der natürlich so bemessen ist, daß das
Hahnküken 12 zwischen der eingangs erwähnten Offen- und
Sperrstellung seiner Durchgangsbohrung 19 verstellt wird.

Bemißt man den Winkelbetrag 32, über den sich die Wendelung
der Führungsnuten 3o, 3o' erstreckt, genau gleich dem
benötigten Stellwinkel für die Verstellung des Hahnkükens
12 zwischen seiner Offen- und Sperrlage, so übernehmen
die Enden der Führungsnuten 3o, 3o' in Wechselwirkung
mit den Radialansätzen 52, 52' die Wirkung von Anschlägen.
Beim Drehen der Handhabe 5o schlägt die Stellspindel am
Ende der Führungsnuten 3o, 30' an und bestimmt dann die
Endposition der Drehbewegung des Hahnkükens 12. Auf
bereits erwähnte Anschlagsmöglichkeiten im Bereich der
genannten Halteplatte 21 und Unterlegscheibe 22 kommt es
dann nicht mehr an.

DIPL.-PHYS. BUSE · DIPL.-PHYS. MENTZEL · DIPL.-ING. LUDEWIG
Jnterdörnen 114 · Postfach 200210 · 5600 Wuppertal 2 · Fernruf (0202) 55 70 22/23/24 · Telex 8 591 606 wpat

56                      *8a*          5600 Wuppertal 2, den

Kennwort: "Kugelhahnschieber"


B e z u g s z e i c h e n l i s t e :


| | |
|---|---|
| 1o | Absperrhahn |
| 11 | Hahngehäuse |
| 12 | Hahnküken |
| 13 | Zylinderwand |
| 14, 14' | Endstück |
| 15 | Eintrittsrohr |
| 15' | Austrittsrohr |
| 16 | Drehzapfen |
| 17 | Ausbruch |
| 18 | Vierkant |
| 19 | Durchgangsbohrung in 12 |
| 20 | Stutzen |
| 21 | Halteplatte |
| 22 | Unterlegscheibe |
| 23 | Sicherungsring |
| 24 | Stellnuß |
| 25 | Nußboden |
| 26 | Hülseninnenraum |
| 27 | Vierkant |
| 28 | Aussparung |
| 29 | Hülsenwand von 24 |
| 30, 30' | Führungsnut |
| 31 | Hülsenachse |
| 32 | Winkelbetrag der Wendelung von 30, 30' |
| 33 | Spindel |
| 34 | Gewindegang von 33 |

*84*                                   0217172

| | |
|---|---|
| 35 | axiale Nutlänge von 30, 30' |
| 36 | Spindellager |
| 37 | Flansch von 36 |
| 38 | Lagerbuchse von 36 |
| 39 | Spindelschaft |
| 40 | Verschlußkappe |
| 41 | Kappenhals |
| ·42 | Kappenkopf |
| 43 | Madenschraube |
| 44 | Hüllrohr |
| 45 | Schweißnaht |
| 46 | Ringscheibe |
| 47 | Einlage |
| 48 | Schaftende von 33 |
| 49 | Radialaussparung |
| 50 | Drehhandhabe |
| 51 | Spindelmutter |
| 52, 52' | Radialansatz an 51 |

DIPL.-PHYS. BUSE · DIPL.-PHYS. MENTZEL · DIPL.-ING. LUDEWIG
Jnterdörnen 114 · Postfach 200210 · 5600 Wuppertal 2 · Fernruf (0202) 557022/23/24 · Telex 8591606 wpat

0217172

56                                    5600 Wuppertal 2, den

Kennwort: "Kugelhahnschieber"

Manibs R. Mannesmann & ibs Nagel GmbH. & Co. KG.,
Lempstraße 24, 5630 Remscheid-Bliedinghausen

---

A n s p r ü c h e :

1.) Absperrhahn (1o) mit in einem Hahngehäuse (11) drehbar
gelagerten, insbesondere kugelförmigen Hahnküken (12),

das mit einem Drehzapfen (16) aus dem Hahngehäuse (11)
herausragt

und das durch eine damit verbundene Handhabe (5o)
um einen bestimmten, durch seine Offen- und Sperrstellung bestimmten Stellwinkel (32) verdrehbar
ist,

d a d u r c h   g e k e n n z e i c h n e t,

daß der Drehzapfen (16) mit einer gleichachsig angeordneten, hülsenförmig gestalteten Stellnuß (24) drehfest
verbunden (18,27) ist,

die Hülsenwand (29) mit einer wendelförmigen Führungsnut (3o;30') versehen ist,

deren Wendelgang sich winkelmäßig (32) mindestens
über den Stellwinkel des Hahnkükens (12) erstreckt, im Hülseninneren (26) eine dazu koaxiale Spindel (33) angeordnet ist,

welche drehfest mit der Handhabe (50) verbunden (48;49) ist und

auf welcher eine mit einem Radialansatz (52;52') versehene Spindelmutter (51) sitzt,

wobei der Radialansatz (52;52') in die Führungsnut (30; 30') der Stellnuß (24) eingreift.

2.) Absperrhahn nach Anspruch 1, dadurch gekennzeichnet, daß die Gewindegänge (34) der Spindel (33) sich über die ganze axiale Länge (35) der gewendelten Führungsnut (3o;30') erstrecken.

3.) Absperrhahn nach Anspruch 1 oder 2, dadurch gekennzeichnet, daß die Wendelsteigung der Führungsnut (30;30') um ein Vielfaches größer als die Steigung der Gewindegänge (34) der Spindel (33) ausgebildet ist.

4.) Absperrhahn nach einem oder mehreren der Ansprüche 1 bis 3, dadurch gekennzeichnet, daß die hülsenförmige Stellnuß (24) über eine Steckverbindung (18;27) lösbar mit dem Drehzapfen (16) gekuppelt ist.

5.) Absperrhahn nach einem oder mehreren der Ansprüche 1 bis 4, dadurch gekennzeichnet,

daß die Spindelmutter (51) ein Paar von einander insbesondere diametral gegenüberliegenden Radialansätzen (52;52') aufweist und die hülsenförmige Stellnuß (24) zwei, im Winkelversatz zueinander angeordnete, parallele Führungsnuten (3o,30') besitzt,

in welche (3o;30') je einer der beiden Radialansätze (52;52') eingreifen.

6.) Absperrhahn nach einem oder mehreren der Ansprüche 1 bis 5, dadurch gekennzeichnet,

daß die hülsenförmige Stellnuß (24) von einem Hüllrohr (44) umschlossen ist,

das mit dem Hahngehäuse (11) verbunden, insbesondere festgeschweißt (45) ist

und aus dessen stirnseitig verschlossenem (36,40) Rohrende das Schaftende (48) der Spindel (33) herausragt,

wobei die Dreh-Handhabe (50) für das Hahnküken (12) drehfest am Schaftende (48) sitzt.

7.) Absperrhahn nach einem oder mehreren der Ansprüche 1 bis 6, dadurch gekennzeichnet, daß der Wendelgang der Führungsnut (30;30') sich winkelmäßig genau über den Stellwinkel des Hahnkükens (12) erstreckt und die Enden der Führungsnut (30;30') mit dem Radialansatz (52;52') der Spindelmutter (51) anschlagartig zusammenwirken.

FIG.1

Manibs

FIG. 3

FIG. 2

FIG. 4

0217172

Manibs